# EUROPEAN PATENT APPLICATION

(11) **EP 1 742 464 A1**
(43) Date of publication of application: **10.01.2007**
(21) Application number: 06010199.5
(22) Date of filing: 17.05.2006
(51) Int. Cl.: H04N 5/44

(54) **Broadcast receiving apparatus offering a multichannel-stream and method of offering a multi-stream**

(30) Priority: 08.07.2005 KR 2005061703
(71) Applicant: Samsung Electronics Co., Ltd., Suwon-si, Gyeonggi-Do (KR)
(72) Inventor: Sung, Je-Hun, Jungrang-gu Seoul (KR)
(74) Representative: Grünecker, Kinkeldey, Stockmair & Schwanhäusser Anwaltssozietät

(57) **Abstract**

A broadcast receiving apparatus for offering a multi-stream and method for offering the multi-stream are provided for a variety of services through multi-stream without adding tuners. The broadcast receiving apparatus may include a plurality of tuners for receiving a plurality of AV streams via in-band channels of a certain network. A modem, which is connected to the network, receives a datagram including AV streams. An AV stream separator separates and outputs the AV streams from the datagram received through the modem. A MUX generates a multi-stream by combining the plurality of AV streams received through the plurality of tuners and the AV streams separated from the datagram.

## Description

### BACKGROUND OF THE INVENTION

### Field of the invention

The present invention relates to a broadcast receiving apparatus for offering a multi-stream and a method for offering the multi-stream. More specifically, the present invention relates to a broadcast receiving apparatus for offering a multi-stream that descrambles an audio and video (AV) stream received through an out-of-band channel, and providing the AV stream with an AV stream received through an in-band channel and a method thereof.

### Description of the Related Art

Generally, in order for a user to use a pay service from a broadcasting station, a receiving module functioning as a broadcast receiving apparatus, such as, a settop box and a conditional access system (CAS), such as, a cable card is required. Cable broadcasting and satellite broadcasting are offered as pay services. In cable broadcasting, Internet service via cable networks is becoming widespread according to the digitalization of broadcasting.

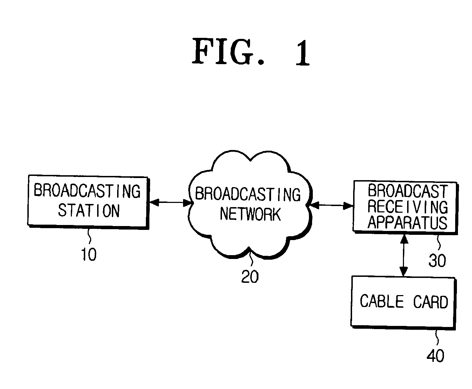

Fig. 1 is a view for describing a general cable broadcasting transmission/reception system.

Referring to Fig. 1, a broadcasting station 10 provides a broadcasting program and supplementary data to a broadcast receiving apparatus 30 via a broadcasting network 20. The broadcasting station 10 generates an AV stream corresponding to the broadcasting program and supplementary data corresponding to the supplementary information of the broadcasting program. The broadcasting station 10 scrambles, modulates and transmits the supplementary data.

The broadcasting network 20 transmits the modulated AV stream to the broadcast receiving apparatus 30 via an in-band channel and transmits the modulated supplementary data to the broadcast receiving apparatus 30 via an out-of-band channel. The broadcast receiving apparatus 30 receives and demodulates the AV stream and supplementary data, and transmits the data to a cable card 40.

The cable card 40, which is also called 'point of deployment (POD)', is a receiving module which functions as a conditional access system for a user to use a pay service provided from the broadcasting station 10. The cable card 40 descrambles the AV stream and supplementary data, and sends the descrambled data to the broadcast receiving apparatus 30. The broadcast receiving apparatus 30 signal-processes the descrambled data, and provides the data to a user.

As described above, a user can use a pay service provided by the broadcasting station 10. If the user inputs a command to the broadcast receiving apparatus 30 to request certain information from the broadcasting station 10, the broadcast receiving apparatus 30 transmits the user's request to the broadcasting station 10 via the broadcasting network 20 of an out-of-band channel.

Recently, broadcasting programs have become more diverse and improved in image quality that transmission via an in-band channel encounters a physical limit. As a result, confirming multi channels is difficult. Moreover, a limit of services may occur and a user may not receive diverse services with high-definition. Additionally, an economic loss may occur as in-band channels increase, and tuners corresponding to the increased channels may have to be added.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a broadcast receiving apparatus to offer a multi-stream combined with AV streams received via out-of-band channels and AV streams received via in-band channels in order for a user to use a variety of services with high-definition from a broadcasting station and to process AV streams added according to diverse broadcasting programs.

In order to achieve the above-described aspects of exemplary embodiments of the present invention, there is provided a broadcast receiving apparatus including a plurality of tuners for receiving a plurality of AV streams via in-band channels of a certain network. A modem, which is connected to the network, receives a datagram including AV streams. An AV stream separator separates and outputs the AV streams from the datagram received through the modem. A multiplexer (MUX) generates a multi-stream by combining the plurality of AV streams received through the plurality of tuners and the AV streams separated from the datagram.

In an exemplary implementation, the modem may receive the datagram via out-of-band channels of the network. Additionally, in an exemplary implementation, the modem receives the datagram transmitted in Data Over Cable Service Interface Specifications (DOCSIS).

In another exemplary implementation, the datagram may be an Internet Protocol (IP) datagram. Further, in another exemplary implementation, the AV stream separator may separate the AV stream by eliminating a header of the datagram

The MUX generates the multi-stream by adding a pre-header respectively to the plurality of AV streams received through the plurality of tuners and the AV streams separated from the datagram.

According to another aspect of an exemplary embodiment of the present invention, a method for offering a multi-stream of a broadcast receiving apparatus with a plurality of tuners receiving a plurality of AV streams respectively may include receiving a datagram including AV streams from a certain broadcasting station. The AV streams are separated from the datagram. A multi-stream is generated by combining the plurality of AV streams and the AV streams separated from the datagram.

In an exemplary implementation, the datagram may be received via out-of-band channels of a network. Further, in an exemplary implementation, the datagram is transmitted in Data Over Cable Service Interface Specifications (DOCSIS). In addition, the datagram may be an Internet protocol (IP) datagram.

In another exemplary implementation, the AV streams are separated by eliminating a header of the datagram.

According to a further aspect of an exemplary embodiment of the present invention, the multi-stream is descrambled, and the descrambled multi-stream is signal processed and output.

In an exemplary implementation, the multi-stream is generated by adding a pre-header respectively to the plurality of AV streams and the AV streams separated from the datagram.

### BRIEF DESCRIPTION OF THE DRAWINGS

The above aspect and other objects, features, and advantages of certain exemplary embodiments of the present invention will become more apparent from the following description taken in conjunction with the accompanying drawings, in which:

FIG. 1 is a view describing a general cable broadcasting transmission/reception system;

FIG. 2 is a view showing the structure of a broadcast receiving apparatus according to an exemplary embodiment of the present invention; and

FIG. 3 is a flow chart describing the operation of the broadcast receiving apparatus according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

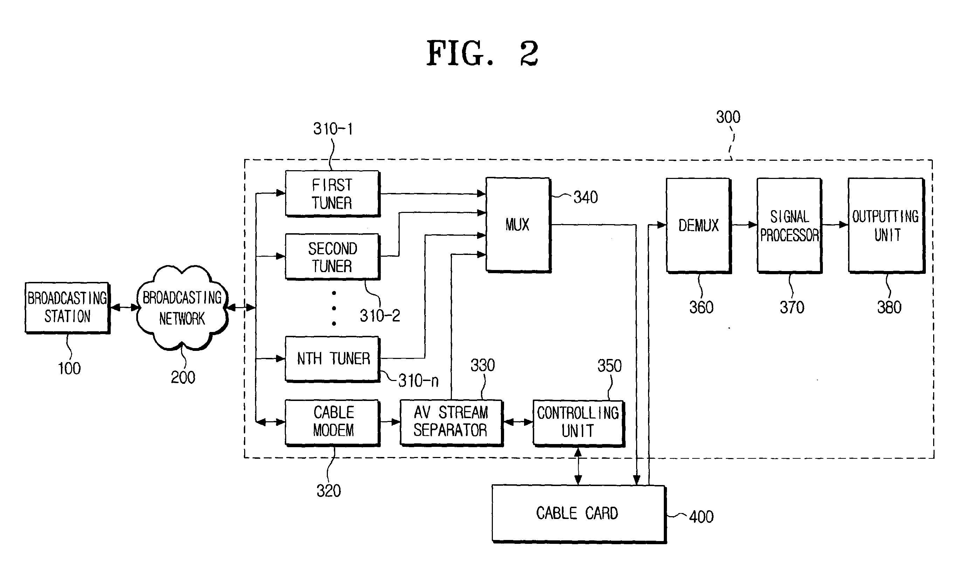

FIG. 2 shows a structure of a broadcast receiving apparatus according to an exemplary embodiment of the present invention.

Referring to Fig. 2, the broadcast receiving apparatus 300 includes first to nth tuners 310-1, 310-2... 310-n, a cable modem 320, AV stream separator 330, multiplexer (MUX) 340, controlling unit 350, demultiplexer (DEMUX) 360, signal processor 370, and outputting unit 380.

The first to nth tuners 310-1, 310-2... 310-n receive and demodulate a modulated AV stream from a broadcasting station 100. The modulated AV stream is transmitted via an in-band channel of a broadcasting network 200. For digital cable broadcasting, the AV stream is modulated and demodulated in a quadrature amplitude modulation (QAM) method.

The cable modem 320 receives and demodulates a modulated Internet Protocol (IP) datagram including an AV stream from the broadcasting station 100. The modulated IP datagram is transmitted via an out-of-band channel of the broadcasting network 200. In the case of the digital cable broadcasting, the IP datagram is modulated and demodulated in a data over cable service interface specifications (DOCSIS) method.

The DOCSIS is a suggested standard of a cable modem from multi-media cable network system partners (MCNS), which is a cable television operator group, and uses a modulation system of up-link of 64/256 QAM and down-link of QPSK (quadrature phase shift keying)/16QAM.

The AV stream separator 330 separates the AV stream from IP datagram and transmits the AV stream to the MUX 340. That is, a media access control (MAC) header, IP header and user datagram protocol (UDP) header of the IP datagram are removed and the AV stream without headers is transmitted to the MUX 340.

The MUX 340 combines a plurality of AV streams received via the first to nth tuners 310-1, 310-2... 310-n and AV streams separated from IP datagrams in the controlling unit 350 to generate multi-streams. A pre-header is attached to each AV stream and the AV stream is transmitted to a cable card 400.

The cable card 400 is a receiving module functioning as a conditional access system. The cable card 400 descrambles the multi-stream received from the MUX 340 and transmits the multi-stream to a DEMUX 360. The cable card 400 descrambles all of the AV streams in multi-streams in the same manner.

That is, a plurality of AV streams received via the first to nth tuners 310-1, 310-2... 310-n and AV streams separated from IP datagrams are generated in the same broadcasting station 100, scrambled in the same manner and transmitted. Therefore, the cable card 400 descrambles all of the streams included in the multi-stream in the same manner.

The DEMUX 360 analyzes a pre-header of the descrambled multi-stream and separates each AV stream. The signal processor 370 signal-processes the separated AV stream and the outputting unit 380 outputs the signal-processed AV stream in video and audio, or transmits the AV stream to an external device (not shown).

The controlling unit 350 controls the AV stream separator 330 to separate the AV stream from the IP datagram and controls overall operations (now shown) of the broadcast receiving apparatus 300.

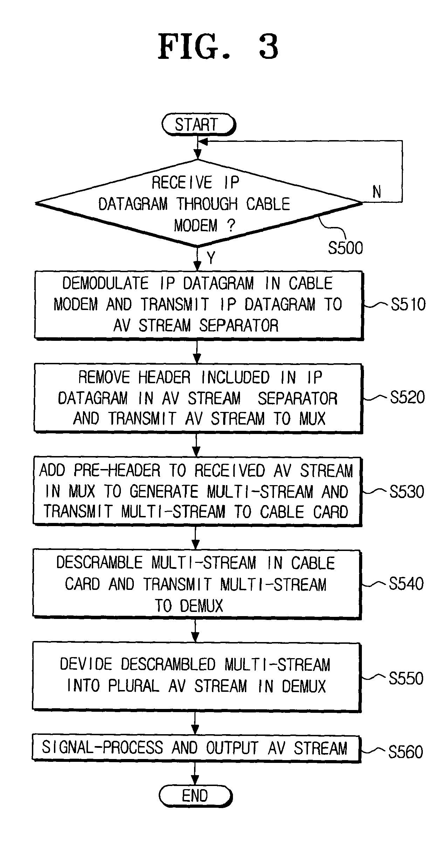

Fig. 3 shows a flow chart describing the operation of the broadcast receiving apparatus according to an exemplary embodiment of the present invention

Referring to Fig. 3, the broadcast receiving apparatus 300 receives the IP datagram through the cable modem 320 (S500).

The received IP datagram includes the AV stream. The IP datagram is generated in the broadcasting station 100, scrambled, modulated in the DOCSIS method and transmitted via an out-of-band channel of the broadcasting network 200. If the IP datagram is received, the cable modem 320 demodulates the IP datagram in the DOCSIS and transmits to the AV stream separator 330 (S510).

The AV stream separator 330 removes a header included in the IP datagram and transmits the AV stream, without the header, to the MUX 340. That is, the AV stream separator 330 removes the MAC header, IP header and UDP header to separate the AV stream from the IP datagram, and transmits the AV stream to the MUX 340 (S520).

The MUX 340 generates a multi-stream by adding a pre-header respectively to the received AV streams and transmits the multi-stream to the cable card 400. That is, a plurality of AV streams received to the first to nth tuners 310-1, 310-2... 310-n via an in-band channel and AV streams separated from IP datagrams are added with a pre-header respectively, so that a multi-stream of one stream form is generated (S530).

The cable card 400 descrambles the multi-stream and transmits the multi-stream to the DEMUX 360 (S540).

The DEMUX 360 divides the descrambled multi-stream into a plurality of AV streams. That is, the DEMUX 360 analyzes the pre-header of the multi-stream and divides the pre-header into the AV streams not combined (S550).

Finally, the signal processor 370 signal-processes the AV stream and the outputting unit 380 outputs the signal (S560).

Through the above-described operation, the multi-stream combining the AV stream via the out-of-band channel and the AV stream via the in-band channel can be provided.

As described above, by providing a multi-stream combining the AV stream via the out-of-band channel and the AV stream via the in-band channel, additional channels within the existing band can be confirmed without adding tuners, and a variety of services with high-definition can be provided.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A broadcast receiving apparatus comprising:
a plurality of tuners for receiving a plurality of audio and video (AV) streams via in-band channels of a network;
a modem, which is connected to the network, for receiving a datagram comprising AV streams;
an AV stream separator for separating and outputting the AV streams from the datagram received through the modem; and
a multiplexer (MUX) for generating a multi-stream by combining the plurality of AV streams received through the plurality of tuners and the AV streams separated from the datagram.

2. The broadcast receiving apparatus as claimed in claim 1, wherein the modem receives the datagram via at least one out-of-band channel of the network.

3. The broadcast receiving apparatus as claimed in claim 1, wherein the modem receives the datagram transmitted in Data Over Cable Service Interface Specifications (DOCSIS).

4. The broadcast receiving apparatus as claimed in claim 1, wherein the datagram comprises an Internet Protocol (IP) datagram.

5. The broadcast receiving apparatus as claimed in claim 1, wherein the AV stream separator separates the AV stream by eliminating a header of the datagram.

6. The broadcast receiving apparatus as claimed in claim 1, wherein the MUX generates the multi-stream by adding a pre-header respectively to the plurality of AV streams received through the plurality of tuners and the AV streams separated from the datagram.

7. A method for offering a multi-stream in a broadcast receiving apparatus with a plurality of tuners receiving a plurality of AV streams respectively, the method comprising:
receiving a datagram comprising AV streams from a broadcasting station;
separating the AV streams from the datagram; and
generating a multi-stream by combining the plurality of AV streams and the AV streams separated from the datagram.

8. The method as claimed in claim 7, wherein the receiving of the datagram comprises receiving the datagram via at least one out-of-band channel of a network.

9. The method as claimed in claim 7, wherein the datagram is transmitted in DOCSIS.

10. The method as claimed in claim 7, wherein the datagram comprises an IP datagram.

11. The method as claimed in claim 7, wherein the separating of the AV streams comprises separating the AV streams by eliminating a header of the datagram.

12. The method as claimed in claim 7, further comprising:
descrambling the multi-stream; and
signal processing and outputting the descrambled multi-stream.

13. The method as claimed in claim 7, wherein the generating of the multi-stream comprises adding a pre-header respectively to the plurality of AV streams and the AV streams separated from the datagram.
